# EUROPEAN PATENT APPLICATION

(11) **EP 4 564 532 A1**
(43) Date of publication of application: **04.06.2025**
(21) Application number: 23212886.8
(22) Date of filing: 29.11.2023
(51) Int. Cl.: H01M 10/653, H01M 10/6551, H01M 50/528, H01M 50/531, H01M 50/593, H01M 10/04, H01M 10/613, H01M 10/654, H01M 50/48, H01M 50/474, H01M 50/477, H01M 10/625, H01M 50/55

(54) **BATTERY CELL, BATTERY MODULE AND VEHICLE COMPRISING A BATTERY CELL OR A BATTERY MODULE**

(71) Applicant: Volvo Car Corporation, 405 31 Göteborg (SE)
(72) Inventor: PERSSON, Klas, 40531 Göeborg (SE); HJÄLM WALLBORG, Martin, 40531 Göteborg (SE); KARLSSON, Daniel, 40531 Göteborg (SE)
(74) Representative: Maiwald GmbH

(57) **Abstract**

The disclosure relates to a battery cell (100), comprising: a housing (20), an electrode material (12, 16), a current collector (30) and an interface component (40), the housing (20) comprising the electrode material (12, 16), at least a portion of the current collector (30) and the interface component (40), the current collector (30) comprising a first connection portion (32) being connected to the electrode material (12, 16) and a second connection portion (34) being connectable to a battery terminal (210), and the interface component (40) being arranged between the current collector (30) and the housing (20), the interface component (40) being in contact with the current collector (30) and the housing (20), the interface component (40) being configured for electrically insulating the housing (20) from the current collector (30), and the interface component (40) comprising an interface material having a thermal conductivity of at least 1 W/(m*K).

## Description

### TECHNICAL FIELD

The present disclosure relates to a battery cell, a battery module comprising at least two battery cells, and a vehicle comprising a battery cell or a battery module.

### BACKGROUND ART

Battery cells, e.g., lithium battery cells, are generally known and widely used. Usually, the anode and the cathode are stacked, and each of the anode and the cathode is connected to a current collector. Those current collectors transport the current from the anode and the cathode, respectively, to the respective terminal of the battery cell. Furthermore, the battery cell usually comprises a housing, surrounding the electrodes, namely the anode and the cathode, as well as the current collectors. The housing is electrically insulated from the current collectors by an electrically insulating component, which is placed between the respective current collector and the housing. This electrically insulating component is typically made of an inexpensive plastic material.

A problem associated with the electrically insulating component is that the electrical insulating component does not or only to a limited amount transfer heat from the inside of the battery cell to the housing, from which it may be transferred to a further heat sink. However, at high load, the heat transfer may not be sufficient, which may lead to a overheating and poor performance of the battery cell.

### SUMMARY

The above problem is at least partially solved or alleviated by the subject matter of the independent claims of the present disclosure, wherein further examples are incorporated in the dependent claims.

According to a first aspect, there is provided a battery cell, comprising a housing, an electrode material, a current collector and an interface component. The housing comprises the electrode material, at least a portion of the current collector and the interface component. The current collector comprises a first connection portion being connected to the electrode material and a second connection portion being connectable to a battery terminal, particularly a first battery terminal. The interface component is arranged between the current collector and the housing, and the interface component is in contact with the current collector and the housing. The interface component is configured for electrically insulating the housing from the current collector, and the interface component comprises an interface material having a thermal conductivity of at least 1 W/(m*K).

It has been recognized by the inventors that the current collector may be a bottleneck in the heat transfer from the inside of the battery cell to its housing. The current collector can reach high peak temperatures, particularly during high load, e.g., when fast charging the battery cell. However, using an interface material with a thermal conductivity of at least 1 W/(m*K) allows transferring heat generated in the current collectors to the housing of the battery cell. Thus, heat generated in the current collector or current collectors can be transmitted to the housing via the interface component having the interface material more efficiently compared to the inexpensive plastic material with typically very low thermal conductivities in the range of 0.2 W/(m*K) or less, so that the temperature of the current collector(s) can be significantly reduced.

Further, the housing may be connected to a heat sink. Thereby, it is possible to keep the temperature of the housing at a moderate level and/or to prevent overheating of the battery cell. Further, preventing overheating of the housing may prevent the housing from getting warmer than the current collector and, therefore, may prevent transmitting heat from the housing to the current collector via the interface component. By reducing the temperature, particularly peak temperatures, inside the battery cell, particularly at the current collector(s), also the temperature of other parts of the battery cell may have reduced temperatures. In particular, the electrolyte and/or other heat-sensitive materials inside the battery cell can be prevented from being exposed to excessively high temperatures. By reducing the temperature of the electrolyte and/or other heat-sensitive materials, also referred to as part of the battery cell that are affected by temperature, a lifetime of those materials can be increased, thereby increasing life durability of the battery cell.

Accordingly, using the interface component with the interface material of the herein specified thermal conductivity, which may also be referred to as a thermally conductive material. It allows to reduce a peak temperature in the battery cell, particularly a peak temperature of the current collector(s), thereby increasing the lifetime of the battery cell, particularly by increasing lifetime of the so called sensitive active materials, e.g., the electrolyte, of the battery cell. The sensitive active materials comprise the components of the battery cell that are affected by particularly high temperatures.

The electrode material may be an anode material and/or a cathode material. In particular, the electrode material may be in the form of several sheets or layers of anode material and/or a cathode material. Further, the battery cell may comprise a separator material. The separator material may be in the form of several sheets or layers of separator material. The sheets or layers of anode material and cathode material may be alternating and having a sheet or layer of separator material therebetween. An arrangement of the electrode material and separator material, such as a repetitive arrangement of sheets or layers of anode material, separator material, cathode material may be herein described as an electrode arrangement. Such an electrode arrangement may have the form of a jelly roll or jelly stack. The battery cell may further comprise electrolyte in any form, e.g., liquid or solid, may be used in the battery cell. Such electrolyte may be respectively arranged between two adjacent ones of the aforementioned sheets or layers for ion transfer.

For example, the first connection portion of the current collector may be one or more electrode tabs, in particular from the electrode material, e.g., of the anode material and/or cathode material. The first connection portion of the current collector may be located inside the housing. The second connection portion may be located outside the housing. For example, the second connection portion may comprise all the electrode tabs connected with one another and extending out of the housing. The battery terminal may be connected to one battery cell or may be connected to two or more battery cells. Accordingly, the battery terminal is different from the current collector in that the current collector may extend internally the battery cell, whereas the battery terminal is external of the housing of the battery cell. Further, the current collector may be directly connected to the electrode tabs or be part thereof, whereas the battery terminal is only indirectly connected to the electrode material via the current collector. The current collector may be connected to the electrode material of the battery cell, whereas the battery terminal may be connected to a current collector of at least one battery cell or to current collectors of two or more battery cells, wherein each of two or more current collectors may be connected to the same type of electrode, respectively. Additionally, or alternatively, the battery terminal may be part of a battery module, the battery module comprising at least two battery cells and a casing.

According to an example, the interface material may have a thermal conductivity of at least 10 W/(m*K). The higher the thermal conductivity of the interface material, the better the heat transport from the current collector to the housing via the interface component, resulting in preventing the current collector from getting too warm, or even overheating, particularly during high load. It is to be noted that the interface material is configured to electrically insulate the current collector and the housing. In other words, the higher the thermal conductivity of the interface material the better, as long as the interface material is capable of electrically insulating the current collector and the housing.

According to an example, the interface material may be at least one of a paste, an adhesive, a pad, and a phase-change material. A paste, particularly a thermal paste, may provide a very thin bond line and therefore a very small thermal resistance. Similar to the paste, an adhesive, particularly a thermal adhesive, may provide a very thin bond line. Compared to the paste, the adhesive may additionally provide additional mechanical strength to the bond, in particular after curing. The adhesive may be a single-part formulation or a two-part formulation. A two-part formulation adhesive may contain additives to improve, e.g., thermal conductivity. For example, the additives may be solid fillers, such as metal oxides, carbon black, carbon nanotubes, etc. or may be liquid metal droplets. A pad, particularly a thermal pad, may be manufactured and used in a solid state, which makes it easily applicable. A pad may provide thicker bond lines, e.g., ranging in thickness from larger than a few hundred µm to a few mm. A phase-change material may be a naturally sticky material, and may be used analogously to the paste. However, its application may be similar to the pad. After achieving a melting point, e.g., a melting point of 55-60 degrees Celsius, the phase-change material may change from a solid state to a liquid state or some intermediate state, thereby filling potential gaps between the current collector and the housing. This may allow for a more flexible design allowing for gaps between the current collector and the housing.

According to an example, the interface material may be a plastic. Alternatively, the interface material may be made of a metal. A plastic is to be understood as a plastic material being made of one, two or more different plastic materials. A plastic material comprising only one plastic material may be referred to as unblended plastic material. A plastic material comprising two or more plastic materials may be referred to as a blended plastic material or a composite plastic material including fiber reinforced plastic materials, plastic materials filled with additives and the like. Plastic materials may provide a wide range of manufacturing and/or application processes. For example, the interface component may made by injection molding, extrusion, and the like. Further, plastic materials may allow to be adapted to the application, this means, plastic materials may allow to be custom-made for the intended application. In addition to that, plastic materials may be cost-efficient, particularly may be a low-cost material, and may be manufacturable in high quantities. Furthermore, the interface material being a plastic may be low in weight, particularly compared to an interface material being made of a metal. On the other hand, a metal may provide higher strength and/or a higher thermal conductivity than the plastic. However, the metal being used as interface material may need to have electrically isolating characteristics, while the plastic does not. By using a thermally conductive plastic as interface material, the advantageous of both, the insulating properties and improved thermal conductivity, may be utilized.

According to an example, the interface component may be a cured component, the cured component being cured after being arranged in a liquid form between the housing and the current collector. Such interface component may be made of a curable paste, for example. It may be easy to apply and may fill any gaps and/or any unevenness or roughness in the surfaces of the current collector and/or the housing. Hence, any imprecisions in the manufacturing of the current collector and/or the housing may be compensated for. Additionally, it may provide thicker bond lines than the paste, as it cures while still allowing an easy disassembly, thanks to limited adhesiveness.

According to an example, the interface component may be an injection molded component. In particular, it may be injection molded before introduced into the housing of the battery cell. Injection molding is a manufacturing process that may allow manufacturing high quantities at a sufficient quality within short time, thereby allowing the injection molded components to be low in costs.

According to an example, the battery cell may further comprise a preload element configured for forcing the housing, the interface component and the current collector into contact with each other. Thus, the preload element may allow balancing high tolerances. In other words, the preload element may be configured such that it assures the housing, the interface component and the current collector being in contact with each other regardless of tolerances due to manufacturing process of the respective parts, i.e., the housing, interface component and current collector.

According to an example, at least one of the housing, the interface component and the current collector may comprise the preload element. The preload element being integrated in at least one of the housing, the interface component and the current collector may allow reducing the total number of parts. Also, it may facilitate assembling the battery cell.

According to an example, the preload element may be configured as a protrusion of the housing, the interface component and/or the current collector. The protrusion may be deformable, particularly elastically deformable in order to be applicable to a wide range of gap sizes or space sizes. In other words, a deformable protrusion may allow balancing different gap or space sizes between the respective parts in order to assure that the housing, the interface component and the current collector are firmly in contact with each other.

According to an example, the preload element may be configured as a spring element. The spring element may allow for balancing different gap or space sizes in order to assure that the housing, the interface component and the current collector are in contact with each other. The spring element may be formed of the same material as the component in which it is integrated, namely the housing, the interface component, or the current collector. The spring element may be formed as a tongue-like or a finger-like element, protruding from the respective part. It may be configured such that by getting in contact with at least one of the other parts during assembly, it is elastically deformed and thereby applies a biasing force that ensures that the housing, the interface component, and the current collector are in contact with each other.

According to an example, the battery terminal may be connected to the second connecting portion of the current collector. Additionally, the battery terminal may be connected to the second portions of two or more current collectors. The battery terminal may be one of a positive terminal and a negative terminal, depending on whether the first portion of the respective current collector is connected to the electrode material forming an anode or the electrode material forming a cathode. The battery terminal may correspond to the terminal being connected to an external electric load, e.g., an electric device. The battery module may comprise at least two battery cells and two battery terminals, one of which being connected to the anode via a respective current collector and the other one being connected to the cathode via a respective current collector.

According to an example, the battery cell may further comprise a second electrode material, a second current collector and a second interface component, the housing may further comprise the second electrode material, at least a portion of the second current collector and the second interface component, the second current collector comprising a first connection portion being connected to the second electrode material and a second connection portion being connectable to the battery terminal and/or another battery terminal, particularly to a second battery terminal, and the second interface component being arranged between the second current collector and the housing, the second interface component being in contact with the second current collector and the housing, the second interface component being configured for electrically insulating the housing from the second current collector, and the second interface component comprising a second interface material having a thermal conductivity of at least 1 W/(m*K).

In particular, the first electrode material may be one of a cathode or an anode and the second electrode material may be the other one of a cathode or an anode, respectively. One of the current collector may accordingly be an anode current collector and the other current collector may be a cathode current collector. For example, the current collectors may be arranged at opposite sides of the battery cell. Consequently, the first interface component and the second interface component may be arranged at opposite sides of the battery cell, particularly between the battery cell housing and the respective one of the first current collector and the second current collector.

Any of the herein mentioned features with respect to the electrode material, the current collector and the interface component or their arrangement in the battery cell may be equally applied to the second electrode material, the second current collector and the second interface component and their arrangement in the battery cell. For example, the second interface material may have a thermal conductivity of at least 10 W/(m*K), it may be at least one of a paste, an adhesive, a pad, and a phase-change material, it may be a plastic, a cured component and/or an injection molded component. Similarly, there may be a second preload element in the battery cell configured for forcing the housing, the second interface component and the second current collector into contact with each other. Further, at least one of the housing, the second interface component and the second current collector may comprise the second preload element. The second preload element may be configured as a protrusion of the housing, the second interface component and/or the second current collector. The second preload element may be configured as a spring element. The battery terminal or a second battery terminal may be connected to the second portion of the second current collector.

The first current collector and the second current collector may be substantially of the same material and/or may have substantially the same size. Analogously, the first interface component and the second interface component may be substantially of the same material and/or may have substantially the same size. This means, the first interface material may correspond to the second interface material (and vice versa).

According to a second aspect, there is provided a battery module for a vehicle, comprising at least two battery cells according to the first aspect.

The battery module may be configured to bundle two or more battery cells in order to increase the electric power available for an external electric device being connected to the battery module.

According to an example, the battery module may further comprise the battery terminal, the battery terminal being connected to the second connecting portion of the current collector of each battery cell. In particular, the battery module may comprise the first battery terminal and/or the second battery terminal, wherein the first battery terminal may be connected to the second portion of the respective, particularly first, current collector of each battery cell and the second battery terminal may be connected to the second portion of the respective, particularly second, current collector of each battery cell. In other words, one of the two battery terminals may be connected to the anode of each battery cell via the respective current collector, and the other one of the two battery terminals my be connected to the cathode of each battery cell via the respective, other current collector.

According to a third aspect, there is provided a vehicle comprising a battery module according to the second aspect or a battery cell according to the first aspect.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an exploded view of parts a battery cell;
- Figure 2: shows a cross sectional view of a battery cell;
- Figure 3: shows a top view inside an electrode assembly of the battery cell of Fig. 1 or 2;
- Figure 4: shows a cross-sectional view of a portion of a battery cell;
- Figure 5: shows another cross-sectional view of a portion of a battery cell; and
- Figure 6: shows a schematic representation of a vehicle comprising a battery module with multiple battery cells.

The Figures are merely schematic representations and serve only to illustrate examples of the disclosure. Identical or equivalent elements are in principle provided with the same reference signs. If there are more than one identical or equivalent elements, the reference signs may be distinguished from one another by a dot and a number corresponding to a continuous enumeration.

### DETAILED DESCRIPTION

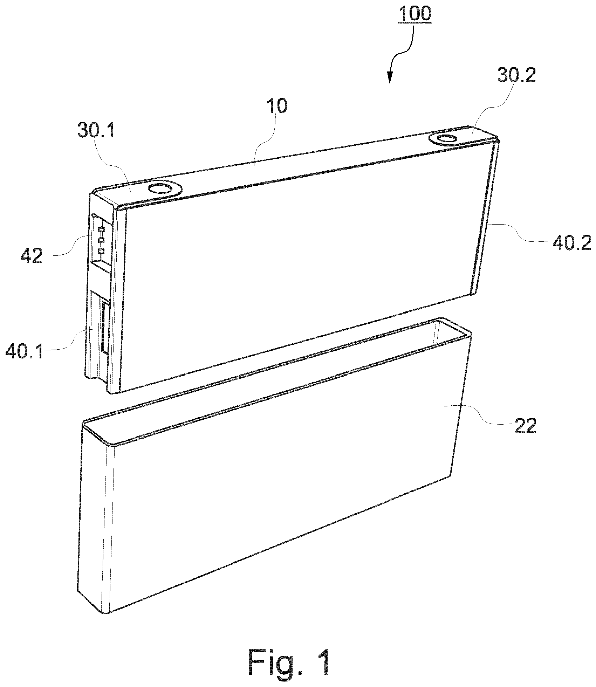

Figure 1 shows part of a battery cell 100 in an exploded view. In this case, the battery cell 100 is shown as a prismatic battery cell. However, the battery cell 100 is not limited to a prismatic battery cell and may have any other form such as but not limited to a pouch battery cell or a cylindrical battery cell, for example.

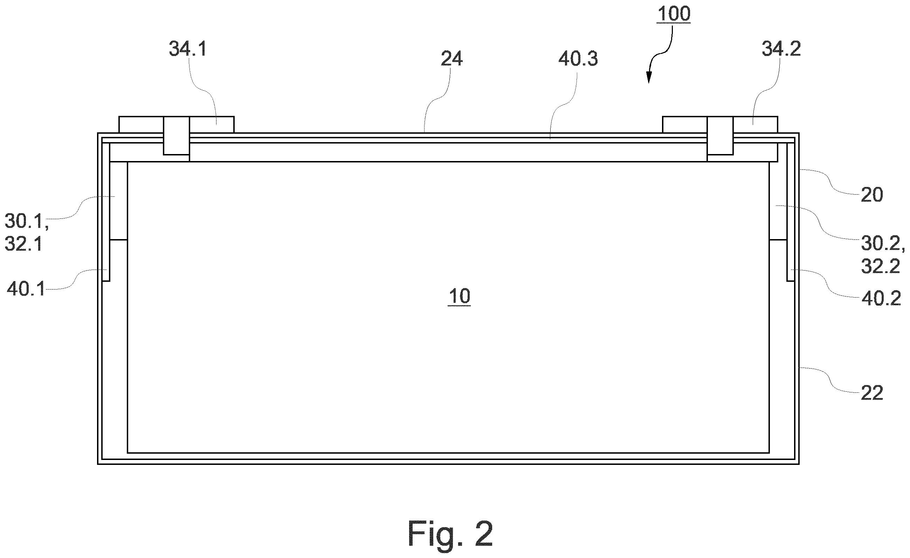

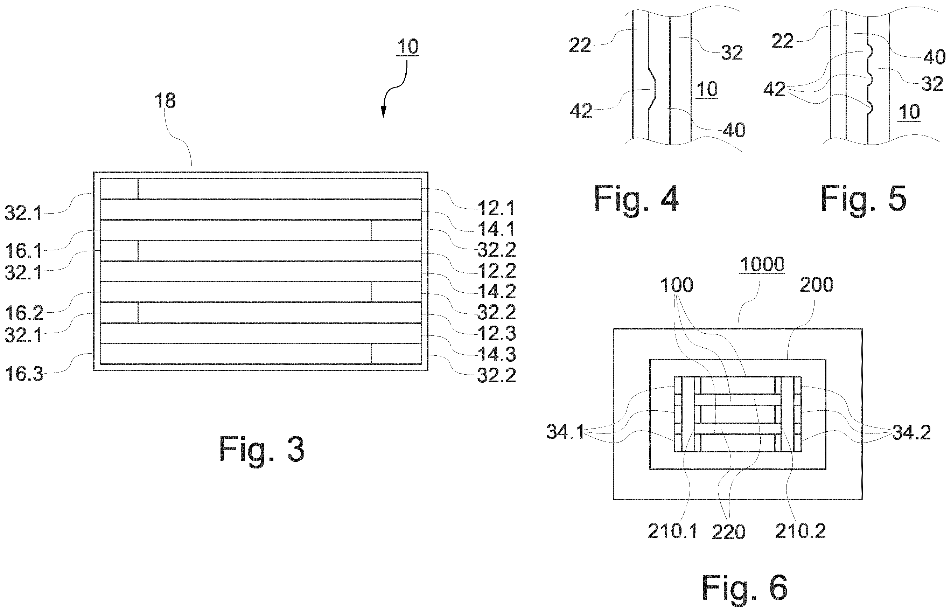

The battery cell 100 comprises an electrode assembly 10, as will be explained in more detail with reference to Fig. 3. The electrode assembly 10 may be of a jelly roll type, for example. The battery cell 100 further comprises two current collectors 30.1, 30.2 at opposite sides of the battery cell 100. Also, the battery cell 100 comprises two interface components 40.1, 40.2 at the same opposite sides of the battery cell 100. The electrode assembly 10 with its current collectors 30.1, 30.2 may be placed together with the two interface components 40.1, 40.2 inside the can 22 of the housing 20 (see Fig. 2) of the battery cell 100.

Figure 2 shows a similar battery cell 100 to the one of Fig. 1 with the difference that here, also the lid 24 of the housing 20 is shown and the housing 20 is closed. Note that the housing 20 may alternatively comprise other portions than can 22 and lid 24 and this is a non-limiting example of a housing 20 comprising two different parts. Further, the battery cell 100 of Fig. 2 comprises differently sized interface components 40.1, 40.2, which do not extend along the full height of the electrode assembly 10 in the example of Fig. 2.

As seen in Fig. 2, the electrode assembly 10 is placed inside the housing 20 and enclosed thereby. The current collectors 30.1, 30.2 at each side comprise different portions, namely a first connection portion 32.1, 32.2 respectively connected to the respective electrode material inside the electrode assembly 10. For example, the first connection portion 32.1 may be connected to the anode or cathode electrode material, whereas the second connection portion 32.2 may be connected to the respective other electrode material. Hence, the current collectors 30.1, 30.2 may form part of the anode or cathode of the battery cell 100. Each one of the current collectors 30.1, 30.2 further comprises a second connection portion 34.1, 34.2 for connection to a battery terminal 210.1, 210.2 (see Fig. 6). In this example, the second connection portions 34.1, 34.2 are formed as respective battery cell terminals for connection to the respective battery terminals 210.1, 210.2. The second connection portions 34.1, 34.2 extend outside of the housing 20, whereas the first connection portions 32.1, 32.2 are located inside the housing 20.

Moreover, as seen in Fig. 2, the battery cell 100 comprises the interface components 40.1, 40.2, 40.3. In this example there is an additional, optional interface component 40.3 located between the lid 24 and an upper portion of the first connection portions 32.1, 32.2 and/or electrode assembly 10. Each one of the interface components 40.1, 40.2 is arranged between one of the current collectors 30.1, 30.2, specifically its first connection portions 32.1, 32.2 in this example, and the housing 20, specifically the can 22 in this example. Each one of the interface components 40.1, 40.2 is further in contact with one of the current collectors 30.1, 30.2, specifically its first connection portions 32.1, 32.2 in this example, and the housing 20, specifically the can 22 in this example.

The interface components 40.1, 40.2, 40.3 are configured for electrically insulating the housing 20 from the current collectors 30.1, 30.2. For this purpose, they comprise an interface material with electrically insulating properties. For example, the interface material may be a plastic. Still, the interface material is a thermally conductive interface material with a thermal conductivity of at least 1, in particular at least 2, further in particular at least 5 W/(m*K). Alternatively, the thermal conductivity of the interface material may be at least 10, at least 50 or at least 100 W/(m*K). Thereby, while electrically insulating the housing 20 from the current collectors 30.1, 30.2, the interface components 40.1, 40.2, 40.3 provide for thermally conducting heat from the electrode assembly 10 during its charging and/or discharging to the housing 20. From there, the heat may be further transferred or distributed, e.g., by means of one or more heat sinks 220 thermally in contact with the housing 20 (see Fig. 6).

An exemplary electrode assembly 10 is shown internally in a top view in Fig. 3. According to this example, electrode material 12, 16 is arranged together with separator material 14 inside the electrode assembly 10. For example, there may be a first electrode material 12, e.g., of anode, and a second electrode material 16, e.g., of cathode. Each one of the electrode materials 12, 16 and the separator material 14 may comprise several layers or sheets of material, e.g., 12.1, 12.2, 12.3, 14.1, 14.2, 14.3, 16.1, 16.2. 16.3 as shown in Fig. 3 and which may be arranged in an alternating order as shown. As shown, the first connection portions 32.1, 32.2 of each one of the first electrode material 12 and the second electrode material 16 may be arranged on opposite sides. The electrode assembly 10 may further comprise a casing 18, in which the electrode material 12, 16 and the separator material 14 may be housed. The casing 18 may further comprise an electrolyte in any form, e.g., fluid, solid or any form in between.

As may be seen in Fig. 1, the battery cell 100 may comprise a preload element 42, which may be configured for forcing the housing 20, the interface component 40.1 and the current collector 30.1 into contact with each other. Especially, they may be forced in contact with each other against the electrode material 12, 16 or the electrode assembly 10, specifically its casing 18. In the example of Fig. 1, the preload element 42 is formed as a spring element. That is, the preload element 42 is designed as a flexible element, which may be preload when inserting the interface components 40.1, 40.2 and the electrode assembly 10 into the housing 20. Thereby, the preload element 42 is preloaded against the respective other parts, e.g., the housing 20, the current collector 30.1, and/or the electrode assembly 10, forcing them into contact with each other despite any tolerances there may be. Similarly, the interface component 40.2 and/or the interface component 40.3 may also comprise one or more such preload elements 42.

However, as shown in Figs. 4 and 5, the preload element 42 may be configured in another form as spring elements, e.g., as one or more protrusions on the respective part that they are located on. Also, or alternatively, the preload element 42 may be located on a different part than the interface components 40.1, 40.2, 40.3.

For example, as shown in Fig. 4, the preload element 42 may be in the form of a protrusion, which in this example is located on the housing 20, specifically the can 22 in this example. The protrusion extends outward of the housing 20 towards the interface component 40, thereby forcing the interface component 40 into contact with the current collector 30, specifically its first connecting portion 32.

Another example of a preload element 42 is shown in Fig. 5, where it is provided as multiple protrusions on the interface component 40, which extend towards the current collector 30, specifically its first connecting portion 32. Other alternatives may include the location of the preload element or preload elements 42 on the current collector 30 and/or the electrode assembly 10, e.g., its casing 18, for example. The orientation of the force exerted by the preload element 42 may be the other way around compared to Figs. 1, 4 and 5, in such examples. For example, as a protrusion, a preload element 42 on the electrode assembly 10 may be extending towards the housing 20, thereby forcing the respective parts into contact with each other. It is also possible to provide the preload element 42 or multiple preload elements 42 on several of the parts.

Figure 6 shows a vehicle 1000 in a schematic representation. The vehicle 1000 comprises a battery module 200 comprising several battery cells 100. In this example case, only three battery cells 100 are shown but the number may be much larger. The second connecting portions 34.1, 34.2 of their respective current collectors 30.1, 30.2 are electrically connected to one of two battery terminals 210.1, 210.2, e.g., a cathode battery terminal and an anode battery terminal. The battery cells 100 may be charged and discharged through the battery terminals 210.1, 210.2. Heat sinks 220 are exemplary arranged between the battery cells 100 for transferring heat away from the housings 20 of the battery cells 100. Alternatively, the heat sinks 220 may be arranged elsewhere, e.g., on the bottom or on top of the battery cells 100, for example.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: electrode assembly
- 12: first electrode material
- 14: separator material
- 16: second electrode material
- 18: casing
- 20: housing
- 22: can
- 24: lid
- 30: current collector
- 32: first connection portion
- 34: second connection portion
- 40: interface component
- 42: preload element
- 100: battery cell
- 200: battery module
- 210: battery terminal
- 220: heat sink
- 1000: vehicle

## Claims

1. A battery cell (100), comprising:
a housing (20),
an electrode material (12, 16),
a current collector (30) and
an interface component (40),
the housing (20) comprising the electrode material (12, 16), at least a portion of the current collector (30) and the interface component (40),
the current collector (30) comprising a first connection portion (32) being connected to the electrode material (12, 16) and a second connection portion (34) being connectable to a battery terminal (210), and
the interface component (40) being arranged between the current collector (30) and the housing (20),
the interface component (40) being in contact with the current collector (30) and the housing (20),
the interface component (40) being configured for electrically insulating the housing (20) from the current collector (30), and
the interface component (40) comprising an interface material having a thermal conductivity of at least 1 W/(m*K).

2. The battery cell (100) according to claim 1, the interface material having a thermal conductivity of at least 10 W/(m*K).

3. The battery cell (100) according to any of the previous claims, the interface material being at least one of a paste, an adhesive, a pad, and a phase-change material.

4. The battery cell (100) according to any of the previous claims, the interface material being a plastic.

5. The battery cell (100) according to any of the previous claims, the interface component (40) being a cured component, the cured component being cured after being arranged in a liquid form between the housing (20) and the current collector (30).

6. The battery cell (100) according to any of the previous claims, the interface component (40) being an injection molded component.

7. The battery cell (100) according to any of the previous claims, the battery cell (100) comprising a preload element (42) configured for forcing the housing (20), the interface component (40) and the current collector (30) into contact with each other.

8. The battery cell (100) according to claim 7, at least one of the housing (20), the interface component (40) and the current collector (30) comprising the preload element (42).

9. The battery cell (100) according to claim 8, the preload element (42) being configured as a protrusion of the housing (20), the interface component (40) and/or the current collector (30).

10. The battery cell (100) according to any one of claims 7 to 9, the preload element (42) being configured as a spring element.

11. The battery cell (100) according to any of the previous claims, the battery terminal (210) being connected to the second connecting portion (34) of the current collector (30).

12. The battery cell (100) according to any of the previous claims, further comprising a second electrode material (12, 16), a second current collector (30) and a second interface component (40), the housing (20) further comprising the second electrode material (12, 16), at least a portion of the second current collector (30) and the second interface component (40), the second current collector (30) comprising a first connection portion (32) being connected to the second electrode material (12, 16) and a second connection portion (34) being connectable to the battery terminal (210) and/or another battery terminal (210), and the second interface component (40) being arranged between the second current collector (30) and the housing (20), the second interface component (40) being in contact with the second current collector (30) and the housing (20), the second interface component (40) being configured for electrically insulating the housing (20) from the second current collector (30), and the second interface component (40) comprising a second interface material having a thermal conductivity of at least 1 W/(m*K).

13. A battery module (200) for a vehicle (1000), comprising at least two battery cells (100) according to any one of the previous claims.

14. The battery module (200) according to the previous claim, further comprising the battery terminal (210), the battery terminal (210) being connected to the second connecting portion (34) of the current collector (30) of each battery cell (100).

15. A vehicle (1000) comprising a battery module (200) according to claim 13 or 14 or a battery cell (100) according to any of claims 1 to 12.
